# EUROPEAN PATENT SPECIFICATION

(11) **EP 3 202 574 B1**
(45) Date of publication and mention of the grant of the patent: **21.08.2019**
(21) Application number: 17151649.5
(22) Date of filing: 16.01.2017
(51) Int. Cl.: B29C 64/245, B29C 64/118

(54) **THREE-DIMENSIONAL FABRICATING CHAMBER AND THREE-DIMENSIONAL FABRICATING METHOD**
KAMMER ZUR DREIDIMENSIONALEN FERTIGUNG UND VERFAHREN ZUR DREIDIMENSIONALEN FERTIGUNG
CHAMBRE DE FABRICATION TRIDIMENSIONNELLE ET PROCÉDÉ DE FABRICATION TRIDIMENSIONNELLE

(30) Priority: 26.01.2016 JP 2016012105
(43) Date of publication of application: 09.08.2017
(73) Proprietor: Ricoh Company, Ltd., Tokyo 143-8555 (JP)
(72) Inventor: KUNIOKA, Satoshi, Tokyo, 143-8555 (JP)
(74) Representative: J A Kemp

(56) References cited:
- DE-B3-102011 014 610
- JP-A- 2001 334 580
- US-A1- 2011 252 618
- US-B1- 6 722 872

## Description

### Technical Field

Embodiments of the present disclosure relate to a three-dimensional fabricating apparatus, a three-dimensional fabricating chamber, and a three-dimensional fabricating method.

### Related Art

Three-dimensional fabricating apparatuses are known that fabricate solid objects (three-dimensional fabrication object) of desired three-dimensional shapes in pre-heated processing space.

For example, WO2000/078519-A1 proposes a three-dimensional fabricating apparatus that fabricates a three-dimensional object according to fused deposition modeling (FDM) in a production chamber (processing space) heated by a heater. The three-dimensional fabricating apparatus moves an extrusion head (fabrication unit) in a two-dimensional direction along a horizontal plane in the production chamber while extruding a thermoplastic material (fabrication material) from the extrusion head, to sequentially laminate layered fabrication structures on a platform (mount table) to finally fabricate a three-dimensional object.

Such a three-dimensional fabricating apparatus that fabricates the three-dimensional fabrication object in the heated processing space may have a difficulty in rapidly increasing or decreasing the temperature in the processing space. Accordingly, for example, in a preheating process in which the temperature in the processing space is heated to a desired temperature before the start of a fabrication process, a failure may occur that the temperature rise is slow and the time required for the preheating process is long, which hampers quick start of the first fabrication process. Further, for example, in sufficiently cooling the processing space in taking out the three-dimensional fabrication object of the processing space after termination of the fabrication process, a failure may occur that the temperature fall is slow and the time required for cooling is long, which hampers early take-out of the three-dimensional fabrication object.

US 2011/252618 A1 discloses a laser sintering 3D printer which includes attachments to change the size of the construction chamber.

US 6 722 872 B1 discloses a 3D modeling apparatus including a movable base plate within a build chamber.

### SUMMARY

The invention is defined in the independent claims 1 and 10.

In the present disclosure, there is provided a three-dimensional fabricating apparatus that includes a chamber, a processing space heater, a fabrication unit, and an insulation-wall mover. The chamber includes insulation walls and a processing space surrounded by the insulation walls. The processing space heater heats the processing space in the chamber. The fabrication unit fabricates a three-dimensional fabrication object in the processing space heated to a target temperature by the processing space heater. The insulation-wall mover displaces at least a part of the insulation walls to increase or decrease a volume of the processing space.

In the present disclosure, there is provided a three-dimensional fabricating chamber that includes insulation walls, a processing space, and an insulation-wall mover. The processing space is surrounded by the insulation walls, to fabricate a three-dimensional fabrication object. The insulation-wall mover displaces at least a part of the insulation walls to increase or decrease a volume of the processing space.

In the present disclosure, there is a three-dimensional fabricating method that includes heating a processing space surrounded by insulation walls to a target temperature, fabricating a three-dimensional fabrication object in the processing space after a temperature of the processing space reaches the target temperature, and fabricating the three-dimensional fabrication object while displacing at least a part of the insulation walls to increase a volume of the processing space.

At least one aspect of the present disclosure exerts excellent effects of facilitating rapid increase or decrease in the temperature in the processing space to solve the above-described problems.

### BRIEF DESCRIPTION OF THE SEVERAL VIEWS OF THE DRAWINGS

The aforementioned and other aspects, features, and advantages of the present disclosure would be better understood by reference to the following detailed description when considered in connection with the accompanying drawings, wherein:
FIG. 1 is an illustration of a configuration of a three-dimensional fabricating apparatus according to an embodiment of the present disclosure;
FIG. 2 is an outer perspective view of a chamber disposed in the three-dimensional fabricating apparatus;
FIG. 3 is a perspective view of the three-dimensional fabricating apparatus in a state in which a front portion of the three-dimensional fabricating apparatus is cut and removed;
FIG. 4 is a schematic view of a configuration of a Z-axis drive assembly in the three-dimensional fabricating apparatus according to an embodiment of the present disclosure;
FIG. 5 is a schematic view of another configuration of the Z-axis drive assembly in the three-dimensional fabricating apparatus according to an embodiment of the present disclosure;
FIG. 6 is a block diagram of control of the three-dimensional fabricating apparatus;
FIG. 7 is an illustration of a state in which a bottom wall of a chamber is positioned to a preheating position in the three-dimensional fabricating apparatus according to an embodiment of the present disclosure;
FIG. 8 is a flowchart of a flow of a preheating process and a fabrication process according to an embodiment of the present disclosure;
FIG. 9 is an illustration of a state in which the bottom wall of the chamber is moved during the fabrication process according to an embodiment of the present disclosure;
FIG. 10 is a graph of an outline of temporal change of the volume of a processing space in the chamber in the three-dimensional fabricating apparatus according to an embodiment of the present disclosure;
FIG. 11 is a graph of an outline of temporal change of a heat supply amount per unit time to be supplied to the processing space in the chamber by a chamber heater or the like in the three-dimensional fabricating apparatus according to an embodiment of the present disclosure;
FIG. 12 is a graph of an outline of temporal change of the temperature in the processing space in the chamber according to an embodiment of the present disclosure;
FIG. 13 is an illustration of a configuration of a three-dimensional fabricating apparatus in a variation according to an embodiment of the present disclosure;
FIG. 14 is a perspective view of a state in which a rear portion of the three-dimensional fabricating apparatus is cut and removed according to an embodiment of the present disclosure; and
FIG. 15 is a schematic view of another configuration of a Z-axis drive assembly in the three-dimensional fabricating apparatus according to an embodiment of the present disclosure.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner and achieve similar results.

Although the embodiments are described with technical limitations with reference to the attached drawings, such description is not intended to limit the scope of the disclosure and all of the components or elements described in the embodiments of this disclosure are not necessarily indispensable.

Below, a three-dimensional fabricating apparatus according to an embodiment of the present disclosure is described that fabricates a three-dimensional object according to fused deposition modeling (FDM). Note that embodiments of the present disclosure are not limited to fused deposition modeling (FDM) and are applicable to a three-dimensional fabricating apparatus that fabricates a three-dimensional object according to any other fabrication method that fabricates a three-dimensional object in a heater chamber. For example, a three-dimensional fabricating apparatus may fabricate the three-dimensional fabrication object by a fabricating method according to another additional manufacturing technology, such as selective laser sintering (SLS) or a removable manufacturing method may be employed.

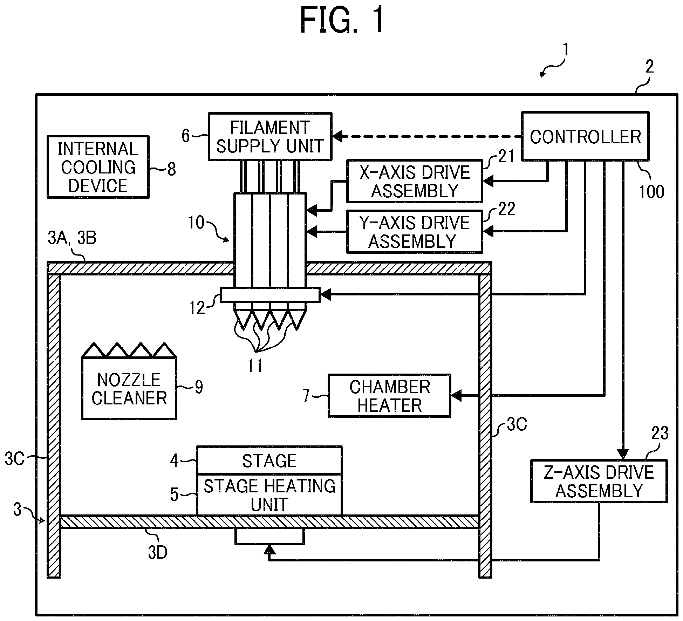

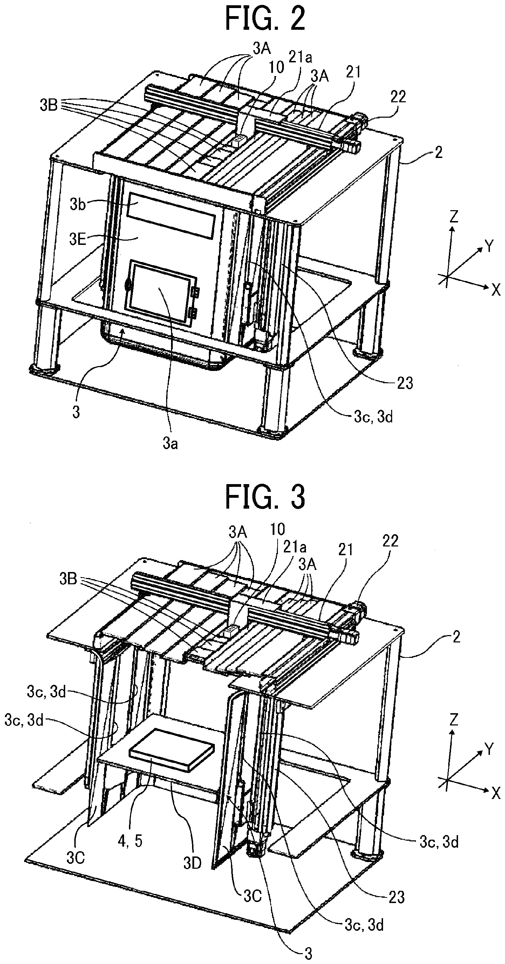

FIG. 1 is an illustration of a configuration of a three-dimensional fabricating apparatus 1 according to an embodiment of the present disclosure. FIG. 2 is an outer perspective view of a chamber disposed in the three-dimensional fabricating apparatus 1 according to the present embodiment. FIG. 3 is a perspective view of the three-dimensional fabricating apparatus 1 in a state in which a front portion of the three-dimensional fabricating apparatus 1 is cut and removed.

The three-dimensional fabricating apparatus 1 includes a three-dimensional fabricating chamber 3 (hereinafter, chamber 3) in a body frame 2. The interior of the chamber 3 is a processing space to fabricate a three-dimensional object. A stage 4 as a mount table is disposed in the processing space, that is, the chamber 3. The three-dimensional object is fabricated on the stage 4.

Most or all of walls surrounding the processing space in the chamber 3 are insulation walls having insulating function. For example, a ceiling wall of the chamber 3 is an insulation wall including a plurality of slide insulators 3A and 3B as described below. Further, opposed side walls 3C of the chamber 3, that is, both walls in a left-and-right direction of the apparatus (a left-and-right direction in FIGS. 2 and 3, in other words, an X-axis direction) are insulation walls having a structure in which insulating material that includes, e.g., glass wool is interposed between an inner plate and an outer plate. Further, a bottom wall 3D of the chamber 3 is also an insulation wall having the structure in which insulating material that includes, e.g., glass wool is interposed between an inner plate and an outer plate. Further, a rear wall and a front wall 3E of the chamber 3 are also insulation walls having the structure in which insulating material that includes, e.g., glass wool is interposed between an inner plate and an outer plate.

In the present embodiment, a swing door 3a is disposed in the front wall 3E of the chamber 3, as illustrated in FIG. 2. The swing door 3a configures the insulation wall, similarly to the front wall 3E, and has a configuration that exhibits a sufficient insulating function. Further, a window 3b is disposed in the front wall 3E of the chamber 3, as illustrated in FIG. 2. This window 3b has a double glass structure that interposes an air layer, and configures the insulation wall, similarly to the front wall 3E.

Note that the insulating configuration of the walls of the chamber 3 is not limited to the one in the present embodiment, and any insulating configuration can be used as long as the configuration can exhibit a necessary insulating function. In the present embodiment, the processing space in the chamber 3 becomes a high temperature of 200°C or more at the time of a fabrication process, and thus it is favorable that the insulation walls can exhibit an insulating function to keep an outside temperature of the chamber 3 to fall within 40°C or less even at such a high temperature.

A fabrication head 10 as a fabrication unit is disposed above the stage 4 in the chamber 3. The fabrication head 10 includes ejection nozzles 11 at a lower side, to eject filaments as fabrication materials. In the present embodiment, four ejection nozzles 11 are disposed on the fabrication head 10. However, the number of the ejection nozzles 11 is not limited to four and may be any other suitable number. The fabrication head 10 has a head heating unit 12 being a fabrication-material heater to heat filaments supplied to the ejection nozzles 11.

Filaments have a shape of long wire and are set to the three-dimensional fabricating apparatus 1 in reeled state. A filament supply unit 6 supplies the filaments to the ejection nozzles 11 on the fabrication head 10. Note that the filaments may be different from each other or the same between the ejection nozzles 11. In the present embodiment, the filaments supplied by the filament supply unit 6 is heated and melted by the head heating unit 12, and the melted filaments are extruded and ejected from the ejection nozzles 11. Thus, layered fabrication structures are sequentially laminated to fabricate a three-dimensional object.

Note that, instead of the filaments being fabrication materials, a support material not constituting a resultant three-dimensional object may be supplied from the ejection nozzles 11 on the fabrication head 10. The support material is made of a material different from the filaments being fabrication materials, and is finally removed from the three-dimensional object made of the filaments. The support material is heated and melted by the head heating unit 12. The melted support material is extruded and ejected from a predetermined ejection nozzle(s) of the ejection nozzles 11, and sequentially laminated in layers.

The fabrication head 10 is movably held to an X-axis drive assembly 21 as a fabrication-unit mover extending in a left-and-right direction (a left-and-right direction, that is, an X-axis direction in FIGS. 2 and 3) of the three-dimensional fabricating apparatus 1 via a connector 21a. The fabrication head 10 is movable along a longitudinal direction of the X-axis drive assembly 21 (the X-axis direction in FIGS. 2 and 3). The fabrication head 10 is movable in the left-and-right direction (the X-axis direction) of the three-dimensional fabricating apparatus 1 by a drive force of the X-axis drive assembly 21. Since the fabrication head 10 is heated to high temperature by the head heating unit 12, the connector 21a preferably has low heat conductivity to reduce transmission of heat from the fabrication head 10 to the X-axis drive assembly 21.

Opposed ends of the X-axis drive assembly 21 are movably held to a Y-axis drive assembly 22 as a fabrication-unit mover extending in a front-and-rear direction (a front-and-rear direction, that is, a Y-axis direction in FIGS. 2 and 3) of the three-dimensional fabricating apparatus 1. The opposed ends of the X-axis drive assembly 21 are slidable along a longitudinal direction of the Y-axis drive assembly 22 (the Y-axis direction in FIGS. 2 and 3). The X-axis drive assembly 21 moves along the Y-axis direction by a drive force of the Y-axis drive assembly 22, thus allowing the fabrication head 10 to move along the Y-axis direction.

In the present embodiment, a bottom wall 3D of the chamber 3 is secured to the body frame 2 and movably held to a Z-axis drive assembly 23 as an insulation-wall mover extending in an up-and-down direction (an up-and-down direction, that is, a Z-axis direction in FIGS. 2 and 3) of the three-dimensional fabricating apparatus 1. The stage 4 is movable along a longitudinal direction of the Z-axis drive assembly 23 (the Z-axis direction in FIGS. 2 and 3). The bottom wall 3D of the chamber 3 is movable along the up-and-down direction of the three-dimensional fabricating apparatus 1 (the Z-axis direction in FIGS. 2 and 3). Since the stage 4 is secured onto the bottom wall 3D, the Z-axis drive assembly 23 functions as a relative mover or a mount table mover, and can move the stage 4 in the Z-axis direction by a drive force of the Z-axis drive assembly 23.

A peripheral portion of the bottom wall 3D of the chamber 3 closely adheres to inner wall surfaces of the opposed side walls 3C, the front wall 3E, and the rear wall of the chamber 3. When the bottom wall 3D of the chamber 3 is moved in the Z-axis direction by the Z-axis drive assembly 23, the bottom wall 3D is moved while allowing the peripheral portion to slide against the inner wall surfaces of the opposed side walls 3C, the front wall 3E, and the rear wall of the chamber 3. Accordingly, shielding properties in the chamber 3 are secured, and sufficient insulating properties in the chamber 3 can be obtained. Note that a slight gap may exist between the peripheral portion of the bottom wall 3D of the chamber 3 and the inner wall surfaces of the opposed side walls 3C, the front wall 3E, and the rear wall of the chamber 3 as long as the sufficient insulating properties in the chamber 3 can be obtained. By forming such a gap, smooth and highly accurate movement of the bottom wall 3D can be achieved, and smooth and highly accurate movement of the stage 4 is achieved.

A chamber heater 7 as a processing space heater to heat the interior of the chamber 3 is disposed in the chamber 3 (the processing space). Since a three-dimensional object is fabricated by fused deposition modeling (FDM), a fabrication process is preferably performed in a state in which the internal temperature of the chamber 3 is maintained at a target temperature. Accordingly, before starting the fabrication process, a preheating process is performed to preliminarily raise the internal temperature of the chamber 3 to the target temperature. In the preheating process, the chamber heater 7 heats the interior of the chamber 3 to raise the internal temperature of the chamber 3 to the target temperature. In the fabrication process, the chamber heater 7 heats the interior of the chamber 3 to maintain the internal temperature of the chamber 3 at the target temperature. A controller 100 as a heating controller controls operation of the chamber heater 7.

For the present embodiment, the X-axis drive assembly 21, the Y-axis drive assembly 22, and the Z-axis drive assembly 23 are disposed outside the chamber 3. Such a configuration prevents the X-axis drive assembly 21, the Y-axis drive assembly 22, and the Z-axis drive assembly 23 from being exposed to high temperature, thus allowing stable drive control. Note that the configuration is not limited to the above-described configuration to dispose the entire X-axis drive assembly 21 and Y-axis drive assembly 22 outside the chamber 3, and a configuration to dispose a part or the entire assemblies inside the chamber 3 may be employed.

In the present embodiment, the drive target of the X-axis drive assembly 21 and the Y-axis drive assembly 22 is the fabrication head 10, and a portion of the fabrication head 10 (a front end portion of the fabrication head 10 including the ejection nozzles 11) is disposed in the chamber 3. In the present embodiment, even if the fabrication head 10 moves in the X-axis direction, the inside of the chamber 3 is shielded from the outside. For example, on a ceiling wall of the chamber 3, as illustrated in FIG. 2 and FIG. 3, a plurality of X-axis slide insulators 3A longer in the Y-axis direction is arrayed in the X-axis direction. Adjacent ones of the X-axis slide insulators 3A are relatively slidable along the X-axis direction. With such a configuration, even when the fabrication head 10 is moved along the X-axis direction by the X-axis drive assembly 21, the X-axis slide insulators 3A slide along the X-axis direction and an upper area of the processing space of the chamber 3 is constantly covered with the X-axis slide insulators 3A.

Likewise, at the ceiling wall of the chamber 3, as illustrated in FIG. 2 and FIG. 3, a plurality of Y-axis slide insulators 3B is arrayed in the Y-axis direction. Adjacent ones of the Y-axis slide insulators 3B are relatively slidable along the Y-axis direction. With such a configuration, even when the fabrication head 10 on the X-axis drive assembly 21 is moved along the Y-axis direction by the Y-axis drive assembly 22, the Y-axis slide insulators 3B slide along the Y-axis direction and the upper area of the processing space in the chamber 3 is constantly covered with the Y-axis slide insulators 3B.

A drive target of the Z-axis drive assembly 23 in the present embodiment is the bottom wall 3D of the chamber 3 or the stage 4. In the present embodiment, even if the bottom wall 3D or the stage 4 moves in the Z-axis direction, the inside of the chamber 3 is shielded from the outside. For example, as illustrated in FIG. 2 and FIG. 3, opposed side walls 3C of the chamber 3 have slide holes 3c extending in the Z-axis direction. Connecting portions of the Z-axis drive assembly 23 and the bottom wall 3D penetrate through the slide holes 3c. The slide holes 3c are sealed with flexible seals 3d made of thermal-insulation material. When the bottom wall 3D is moved in the Z-axis direction by the Z-axis drive assembly 23, the connecting portions of the Z-axis drive assembly 23 and the bottom wall 3D move in the Z-axis direction along the slide holes 3c while elastically deforming the flexible seals 3d. Accordingly, the slide holes 3c formed at the opposed side walls 3C of the chamber 3 are constantly covered with the seals 3d.

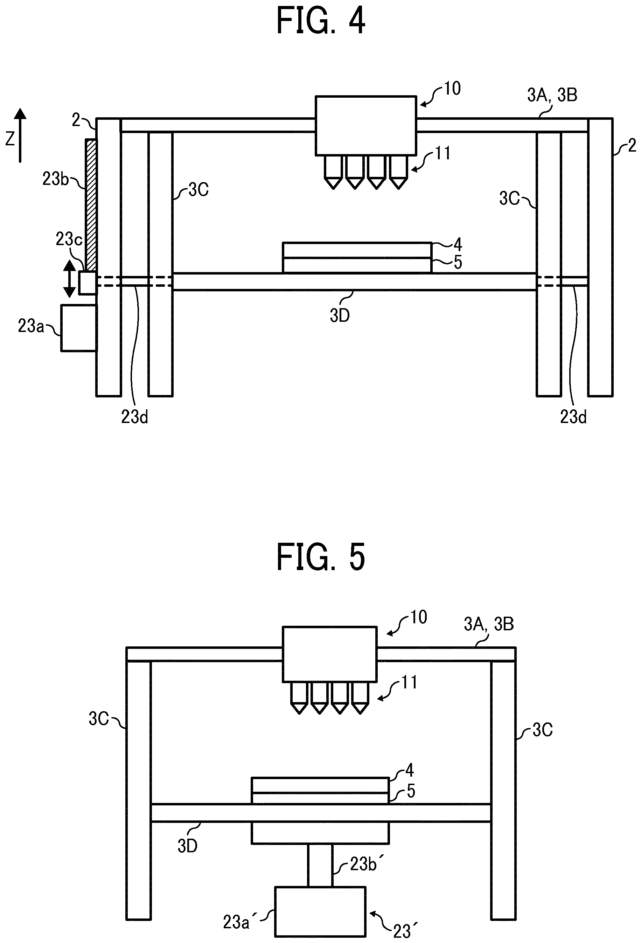

FIG. 4 is a schematic view of a configuration of the Z-axis drive assembly 23. The Z-axis drive assembly 23 according to the present embodiment axially rotates a ball screw 23b extending in the Z-axis direction by a drive motor 23a supported by the body frame 2, thus moving a slide portion 23c in the Z-axis direction along the ball screw 23b. The slide portion 23c is coupled with the bottom wall 3D or the stage 4 of the chamber 3 via a connector 23d. When the drive motor 23a is driven and the slide portion 23c is moved in the Z-axis direction along the ball screw 23b, the connector 23d moves in the Z-axis direction along the slide holes 3c while elastically deforming the seals 3d of the slide holes 3c formed in the opposed side walls 3C of the chamber 3, and the bottom wall 3D or the stage 4 of the chamber 3 is moved in the Z-axis direction with the movement of the connector 23d.

Note that, in the Z-axis drive assembly 23 of the present embodiment, the slide holes 3c are formed in the opposed side walls 3C of the chamber 3. However, from the perspective of the insulating properties of the processing space in the chamber 3, a configuration without such slide holes 3c is more favorable. Therefore, for example, as illustrated in FIG. 5, a Z-axis drive assembly 23' may be employed, which has a shaft 23b' extending in the Z-axis direction attached to a lower portion of the bottom wall 3D of the chamber 3, and moves the shaft 23b' in the Z-axis direction by a drive motor 23a' supported by the body frame 2. In such a case, when the drive motor 23a' is driven and the shaft 23b' is moved in the Z-axis direction, the bottom wall 3D or the stage 4 of the chamber 3 is also moved in the Z-axis direction with the movement of the shaft 23b'. The peripheral portion of the bottom wall 3D of the chamber 3 slides against the inner wall surfaces of the opposed side walls 3C, the front wall 3E, and the rear wall of the chamber 3 while closely adhering to the inner wall surfaces. Accordingly, shielding properties in the chamber 3 are secured, and sufficient insulating properties in the chamber 3 can be obtained. Moreover, it is not necessary to form the slide holes 3c in the opposed side walls 3C of the chamber 3, and thus the shielding properties in the opposed side walls 3C are secured, and enhanced insulating properties can be obtained.

In the present embodiment, the three-dimensional fabricating apparatus 1 further includes, e.g., an internal cooling device 8 to cool an internal space of the three-dimensional fabricating apparatus 1 outside the chamber 3 and a nozzle cleaner 9 to clean the ejection nozzles 11 of the fabrication head 10.

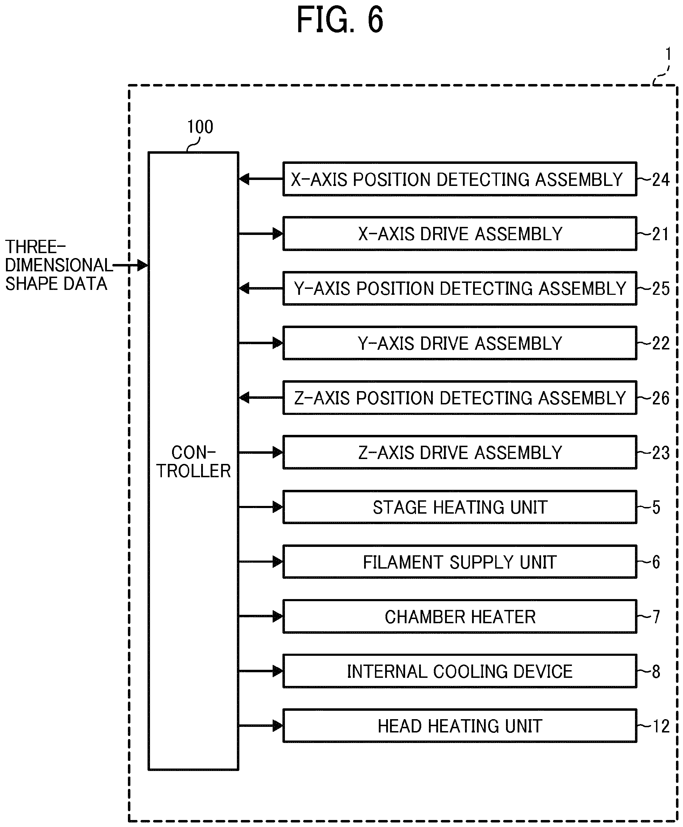

FIG. 6 is a block diagram of control of the three-dimensional fabricating apparatus according to the present embodiment. In the present embodiment, the three-dimensional fabricating apparatus 1 includes an X-axis position detecting assembly 24 to detect the position of the fabrication head 10 in the X-axis direction. Detection results of the X-axis position detecting assembly 24 are transmitted to the controller 100. The controller 100 controls the X-axis drive assembly 21 according to the detection results to move the fabrication head 10 to a target position in the X-axis direction.

In the present embodiment, the three-dimensional fabricating apparatus 1 further includes a Y-axis position detecting assembly 25 to detect the position of the X-axis drive assembly 21 in the Y-axis direction (the position of the fabrication head 10 in the Y-axis direction). Detection results of the Y-axis position detecting assembly 25 are transmitted to the controller 100. The controller 100 controls the Y-axis drive assembly 22 according to the detection results to move the fabrication head 10 on the X-axis drive assembly 21 to a target position in the Y-axis direction.

In the present embodiment, the three-dimensional fabricating apparatus 1 includes a Z-axis position detecting assembly 26 to detect the position of the stage 4, which is disposed on the bottom wall 3D of the chamber 3, in the Z-axis direction. Detection results of the Z-axis position detecting assembly 26 are transmitted to the controller 100. The controller 100 controls the Z-axis drive assembly 23 according to the detection results to move the bottom wall 3D of the chamber 3 to move the stage 4 on the bottom wall 3D to a target position in the Z-axis direction.

As described above, the controller 100 controls movement of the fabrication head 10 and the stage 4 to set the three-dimensionally relative positions of the fabrication head 10 and the stage 4 in the chamber 3 to three-dimensional target positions.

In the present embodiment, since a three-dimensional object is fabricated by fused deposition modeling (FDM), as described above, the fabrication process is preferably performed in a state in which the internal temperature of the chamber 3 is maintained at a target temperature. Accordingly, in the present embodiment, before starting the fabrication process, a preheating process is performed to preliminarily raise the internal temperature of the chamber 3 to the target temperature. In the preheating process, the controller 100 activates the chamber heater 7 to raise the internal temperature of the chamber 3. However, as the volume of the processing space in the interior of the chamber 3 is greater, it may take a longer time to preliminarily heat the interior of the chamber 3, which may hamper quick start of a first fabrication process.

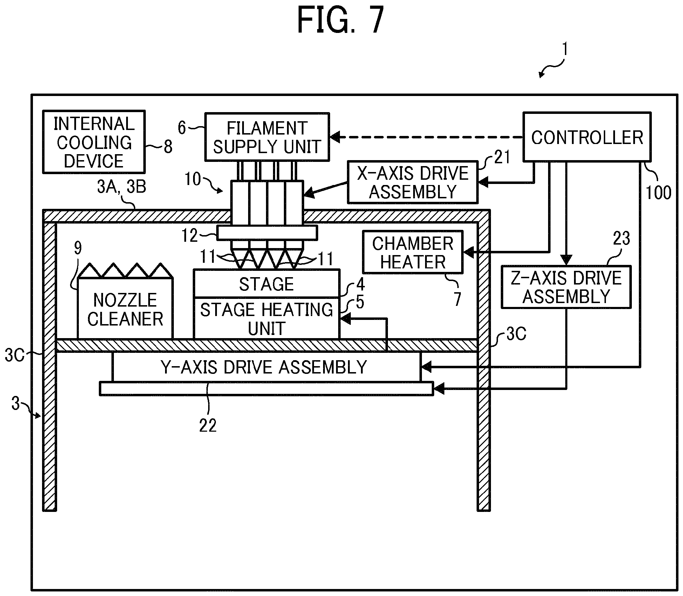

Hence, in starting the preheating process, the controller 100 of the present embodiment first controls the Z-axis drive assembly 23 to raise the bottom wall 3D of the chamber 3, and stops the bottom wall 3D at a predetermined preheating position, as illustrated in FIG. 7. The preheating position is favorably set as high as possible within a range in which the stage 4 on the bottom wall 3D of the chamber 3 does not interfere with the fabrication head 10. The volume of the processing space surrounded by the ceiling wall (including the X-axis slide insulators 3A and 3B), the opposed side walls 3C, the bottom wall 3D, the front wall 3E, and the rear wall of the chamber 3 becomes smaller and the target space to be heated becomes smaller as the preheating position is positioned as higher as possible. Accordingly, the temperature in the processing space can be more promptly increased even if the heat supply amount by the chamber heater 7 is the same.

In particular, as illustrated in FIG. 7, the preheating position according to the present embodiment is set such that the stage 4 is positioned to a target position where the stage 4 is supposed to be positioned at the time of start of the fabrication process, which is started after the preheating process. Accordingly, the fabrication process can be started without driving the Z-axis drive assembly 23 after the preheating process is terminated, and the first fabrication process can be more promptly started.

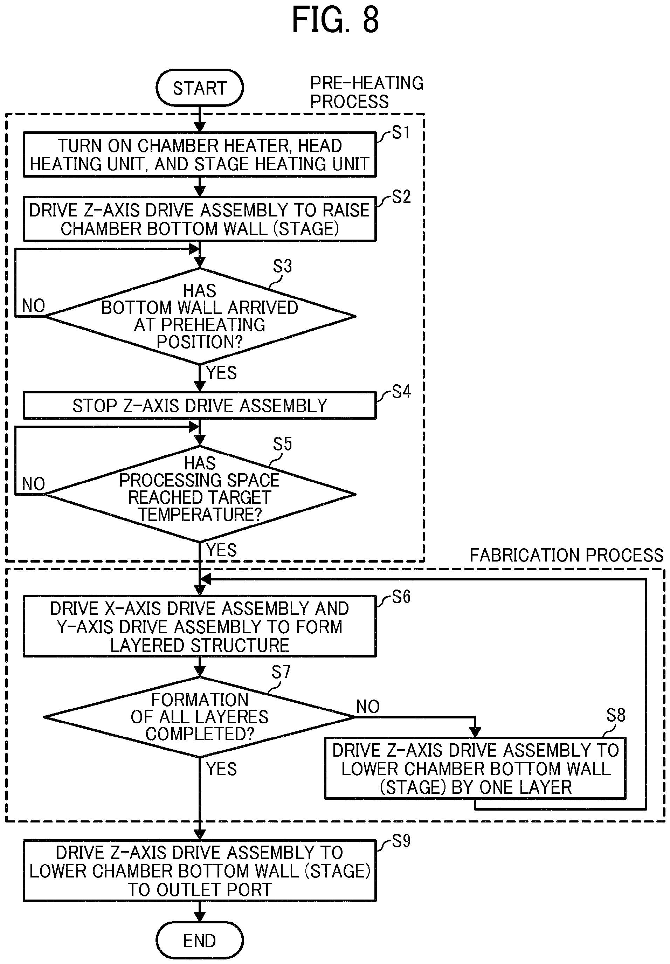

FIG. 8 is a flowchart of a flow of the preheating process and the fabrication process according to the present embodiment. In the present embodiment, when starting fabrication upon an instruction operation of a user, the controller 100 first turns ON electricity to activate the chamber heater 7, the head heating unit 12, and a stage heating unit 5 (S1). Further, the controller 100 controls the Z-axis drive assembly 23 to raise the bottom wall 3D of the chamber 3 from a predetermined standby position (for example, a lowest point) by the drive force of the Z-axis drive assembly 23 (S2). Then, when the bottom wall 3D of the chamber 3 reaches the preheating position (Yes in S3), the controller 100 stops driving of the Z-axis drive assembly 23 (S4). Accordingly, the bottom wall 3D of the chamber 3 is positioned to the preheating position, and the volume of the processing space in the chamber 3 becomes small.

As a result, the volume of the processing space during the preheating process becomes smaller than the volume of the processing space during the fabrication process described below (the maximum volume of the processing space that would be obtained at least at the time of the fabrication process). That is, the volume of the processing space to be heated by a heating value supplied from the chamber heater 7, the head heating unit 12, and the stage heating unit 5 is small during the preheating process. Thus, a rising speed of the temperature in the processing space can be increased, and the temperature in the processing space can be more promptly increased to the target temperature, compared with a case of preheating the processing space with the same volume as the volume during the fabrication process described below.

When the temperature in the processing space has reached the target temperature (Yes in S5), next, the controller 100 is moved onto the fabrication process. Three-dimensional shape data of the three-dimensional fabrication object to be fabricated by the three-dimensional fabricating apparatus 1 of the present embodiment is input from an external device such as personal computer data-communicatively connected to the three-dimensional fabricating apparatus 1 in a wired or wireless manner. The controller 100 generates data of a large number of layered fabrication structures decomposed in the up-and-down direction (fabrication slice data) on the basis of the input three-dimensional shape data. The slice data corresponding to each layered fabrication structure corresponds to a layered fabrication structure formed of the filaments ejected through the fabrication head 10 of the three-dimensional fabricating apparatus 1, and the thickness of the layered fabrication structure is appropriately set according to the performance of the three-dimensional fabricating apparatus 1.

In the fabrication process, first, the controller 100 creates the layered fabrication structure of the lowermost layer on the stage 4 according to the slice data of the lowermost (first) layer (S6). For example, the controller 100 controls the X-axis drive assembly 21 and the Y-axis drive assembly 22 on the basis of the slice data of the lowermost (first) layer to eject the filaments through the ejection nozzles 11 while sequentially moving tips of the ejection nozzles 11 of the fabrication head 10 to a target position (on an X-Y plane). Accordingly, the layered fabrication structure according to the slice data of the lowermost (first) layer is fabricated on the stage 4. Note that the support material that does not configure the three-dimensional fabrication object may sometimes be created together. However, description here is omitted.

Next, the controller 100 controls the Z-axis drive assembly 23 to lower the bottom wall 3D of the chamber 3 by a distance corresponding to one layer of the layered fabrication structure, and lower and position the stage 4 on the bottom wall 3D to a position where the layered fabrication structure of the next (second) layer is created (S8). After that, the controller 100 controls the X-axis drive assembly 21 and the Y-axis drive assembly 22 on the basis of the slice data of the second layer to eject the filaments through the ejection nozzles 11 while sequentially moving the tips of the ejection nozzles 11 of the fabrication head 10 to the target position. Accordingly, the layered fabrication structure according to the slice data of the second layer is fabricated on the layered fabrication structure of the lowermost layer formed on the stage 4 (S6).

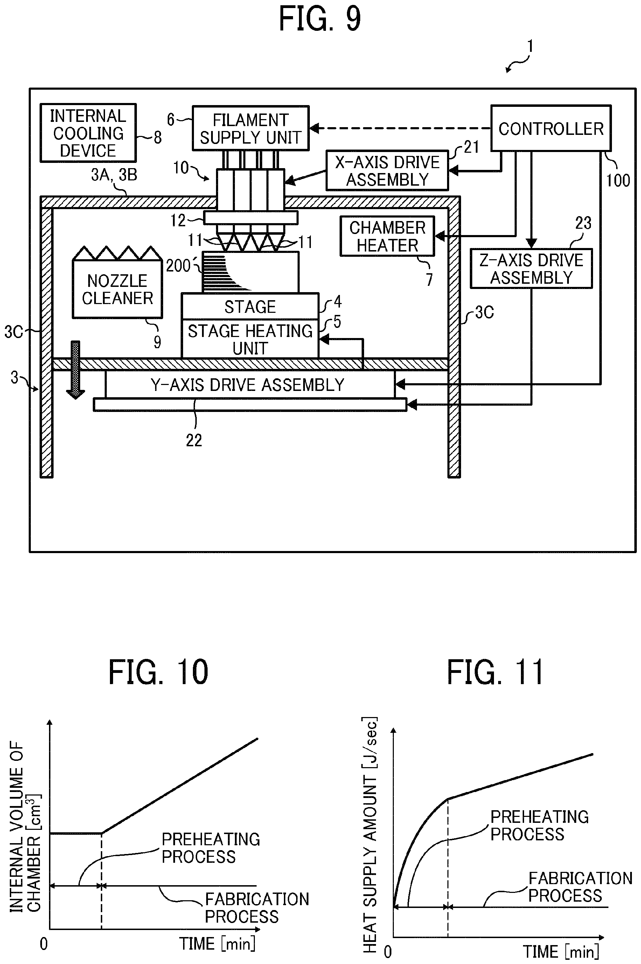

In this way, as illustrated in FIG. 9, the controller 100 repeats the process of controlling the Z-axis drive assembly 23 to laminate layered fabrication structures 200' in order from a lower layer while sequentially lowering the stage 4 on the bottom wall 3D of the chamber 3. Then, when creation of the layered fabrication structure of the uppermost layer has been terminated (Yes in S7), the three-dimensional fabrication object according to the input three-dimensional shape data is fabricated.

When the fabrication process is terminated in this way, the controller 100 controls the Z-axis drive assembly 23 to lower the stage 4 on the bottom wall 3D of the chamber 3 to a predetermined taking-out position (the lowest point in the present embodiment) (S9). This taking-out position is set to a position where the three-dimensional fabrication object on the stage 4 can be easily taken out to an outside of the chamber 3 after the swing door 3a disposed in the front wall 3E of the chamber 3 is opened.

Immediately after the termination of the fabrication process, the processing space in the chamber 3 is still at a high temperature, and thus a user cannot open the swing door 3a and take out the three-dimensional fabrication object in the processing space soon. Therefore, the user opens the swing door 3a and takes out the three-dimensional fabrication object in the processing space after the temperature in the processing space is decreased to a temperature at which the three-dimensional fabrication object can be taken out. The controller 100 favorably provides a cooling period in which the swing door 3a is in a locked state until the temperature in the processing space is decreased to the temperature at which the three-dimensional fabrication object can be taken out, and cancels the locked state of the swing door 3a after the temperature in the processing space is decreased to the temperature at which the three-dimensional fabrication object can be taken out.

Here, in the present embodiment, in the cooling period after the creation of the layered fabrication structures of all of the layers is terminated, the control to lower the stage 4 on the bottom wall 3D of the chamber 3 to the predetermined taking-out position is performed. Therefore, after the creation of the layered fabrication structures of all of the layers is terminated, the volume of the processing space in the chamber 3 is increased due to the lowering of the bottom wall 3D of the chamber 3. In this way, the volume of the processing space is increased in the cooling period after the termination of the fabrication process, and thus the time required for cooling can be shortened and the three-dimensional fabrication object can be taken out early after the fabrication process, compared with a case where the volume of the processing space is unchanged from that of at the time of termination of creation of the layered fabrication structures of all of the layers.

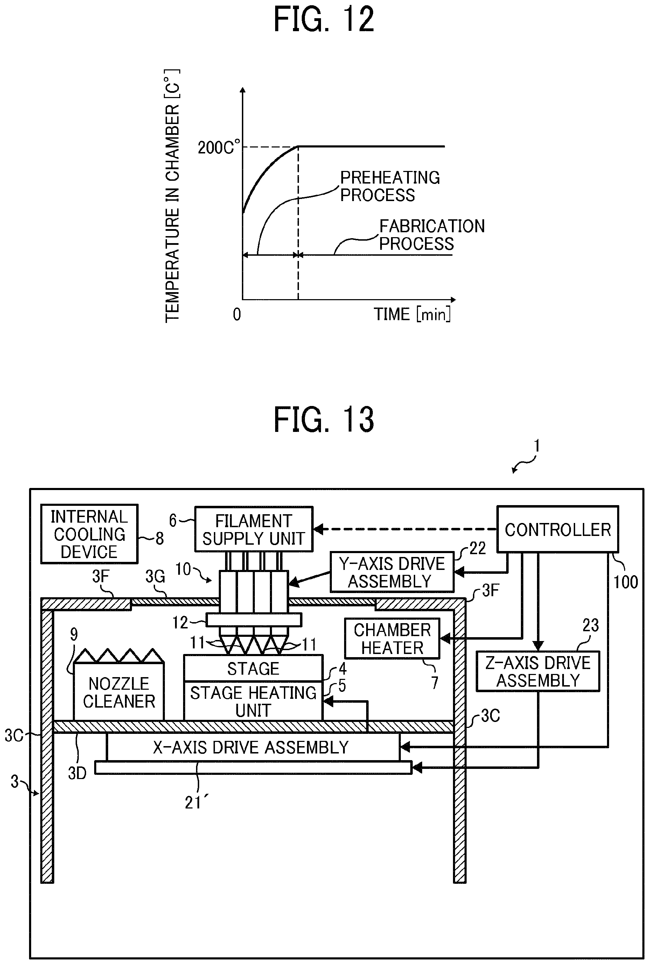

Next, a method of controlling the chamber heater 7 in the preheating process according to the present embodiment will be described. FIG. 10 is a graph of an outline of temporal change of the volume of the processing space in the chamber 3. FIG. 11 is a graph of an outline of temporal change of a heat supply amount per unit time to be supplied to the processing space in the chamber 3 by the chamber heater 7 and the like. FIG. 12 is a graph of an outline of temporal change of the temperature in the processing space in the chamber 3.

As described above, in the present embodiment, the volume of the processing space in the chamber 3 during the preheating process is constantly maintained to a small state, as illustrated in FIG. 10. Then, when the preheating process is terminated and the fabrication process is started, the bottom wall 3D of the chamber 3 is lowered by layer by layer every time the layered fabrication structure is created, and thus the volume of the processing space in the chamber 3 is gradually increased, as illustrated in FIG. 10.

In the present embodiment, the temperature in the processing space during the fabrication process needs to be maintained to the target temperature (about 200°C). In the configuration to gradually increase the volume of the processing space in the chamber 3 during the fabrication process like the present embodiment, if the heat supply amount per unit time by the chamber heater 7 and the like is constant, the temperature in the processing space is gradually decreased with the increase in the volume of the processing space.

Therefore, in the present embodiment, as illustrated in FIG. 11, the controller 100 controls the chamber heater 7 and the like to increase the heat supply amount per unit time by the chamber heater 7 and the like according to the increase in the volume of the processing space in the chamber 3. Accordingly, even if the volume of the processing space in the chamber 3 is increased during the fabrication process, the temperature in the processing space in the chamber 3 during the fabrication process can be maintained to the target temperature (about 200°C), as illustrated in FIG. 12.

<Variation> Next, a variation of a three-dimensional fabricating apparatus 1 according to the present embodiment will be described. In the above-described embodiment, the fabrication head 10 is moved in the two directions of the X-axis direction and the Y-axis direction by the X-axis drive assembly 21 and the Y-axis drive assembly 22, and the stage 4 is moved in the one direction of the Z-axis direction by the Z-axis drive assembly 23. In the present variation, a fabrication head 10 is moved in one direction of a Y-axis direction by a Y-axis drive assembly 22, and a stage 4 is moved in two directions of an X-axis direction and a Z-axis direction by an X-axis drive assembly 21' and a Z-axis drive assembly 23. Note that basic configurations and operations in the present variation are similar to those of the above-described embodiment, and thus different points from the above-described embodiment will be mainly described in the following description.

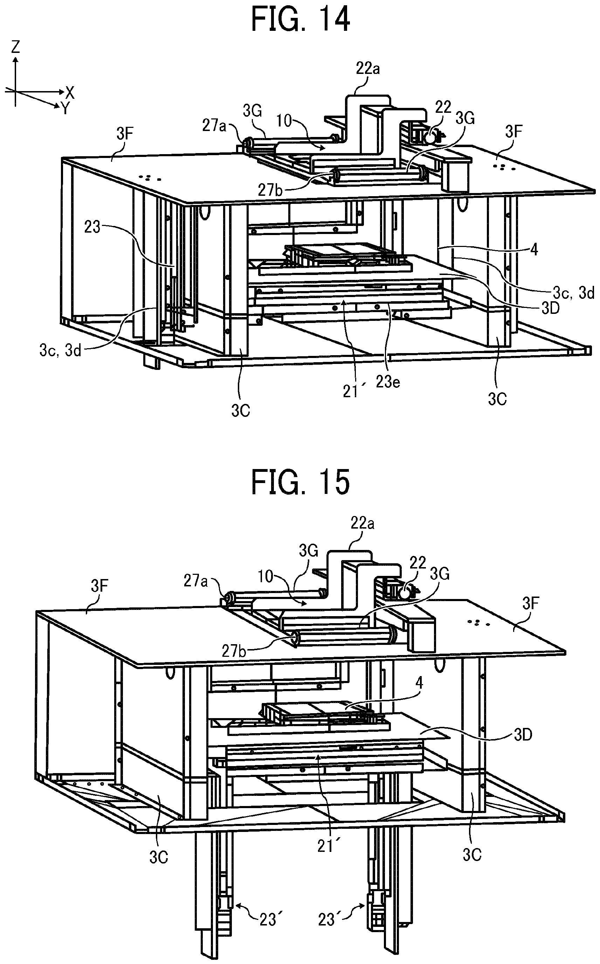

FIG. 13 is an illustration of a configuration of the three-dimensional fabricating apparatus 1 in the present variation. FIG. 14 is a perspective view of a state in which a rear portion of the three-dimensional fabricating apparatus 1 in the present variation is cut and removed. The fabrication head 10 is held to the Y-axis drive assembly 22 as a fabrication-unit mover extending in a front-and-rear direction of the apparatus (a front-and-rear direction = a Y-axis direction in FIGS. 13 and 14) to be movable along a longitudinal direction (the Y-axis direction) of the Y-axis drive assembly 22 via a connector 22a. The fabrication head 10 can be moved in the front-and-rear direction (Y-axis direction) of the apparatus by drive force of the Y-axis drive assembly 22.

A part (a front end portion of the fabrication head 10 including ejection nozzles 11) of the fabrication head 10 as a drive target of the Y-axis drive assembly 22 in the present variation is disposed in a chamber 3, similarly to the above-described embodiment. Even in the present variation, an interior of the chamber 3 is shielded from an outside if the fabrication head 10 is moved in the Y-axis direction. However, a specific configuration thereof is different from the above-described embodiment.

In more detail, a ceiling wall of the chamber 3 in the present variation is an insulation wall made of a secure wall 3F and a flexible insulating sheet 3G. The secure wall 3F has a structure in which insulating material that includes, e.g., glass wool is interposed between an inner plate and an outer plate, similarly to the opposed side walls 3C in the left-and-right direction (X-axis direction) of the apparatus. The flexible insulating sheet 3G is disposed to block an opening formed in the secure wall 3F, corresponding to a movable range of the fabrication head 10. Roll shafts 27a and 27b that hold the insulating sheet 3G in a roll manner are disposed at both sides in the Y-axis direction on an upper surface of the ceiling wall of the chamber 3, as illustrated in FIG. 14. The insulating sheet 3G is secured to the fabrication head 10, and is movable together with the fabrication head 10.

When the fabrication head 10 is moved in the Y-axis direction by the Y-axis drive assembly 22, the insulating sheet 3G is wound up to the roll shaft positioned at the downstream side in the moving direction while the insulating sheet 3G is sent out from the roll shaft positioned at the upstream side in the moving direction with the movement of the fabrication head 10. Accordingly, the insulating sheet 3G is moved in the Y-axis direction in a state of keeping blocking the opening formed in the secure wall 3F of the ceiling wall of the chamber 3. Thus, even if the fabrication head 10 is moved in the Y-axis direction, an upper portion of the processing space in the chamber 3 is constantly covered with the secure wall 3F and the insulating sheet 3G.

Further, in the present variation, the X-axis drive assembly 21' as a mount table mover or a first moving member that moves the stage 4 in the left-and-right direction (X-axis direction) of the apparatus is disposed under a bottom wall 3D of the chamber 3. The stage 4 as a drive target of the X-axis drive assembly 21' in the present variation is disposed above the bottom wall 3D of the chamber 3, that is, in the processing space in the chamber 3. Therefore, it is favorable to shield the interior of the chamber 3 from an outside even if the stage 4 is moved in the X-axis direction.

As such a configuration, a configuration in which a plurality of slide insulators 3A is arrayed in the X-axis direction may be employed, as employed in the ceiling wall of the chamber 3 of the above-described embodiment. That is, a plurality of X-axis slide insulators 3A long in the Y-axis direction is arrayed in the X-axis direction on the bottom wall 3D of the chamber 3, and the adjacent X-axis slide insulators 3A are relatively slidable along the X-axis direction. Accordingly, even if the stage 4 is moved in the X-axis direction by the X-axis drive assembly 21', the plurality of X-axis slide insulators 3A is slid and moved in the X-axis direction with the movement of the stage 4, and the lower portion of the processing space in the chamber 3 is constantly covered with the X-axis slide insulators 3A. As employed in the ceiling wall of the chamber 3 in the present variation, the configuration to send out and wind up the flexible insulating sheet with the roll shafts may be employed, or other configurations may be employed.

Further, in the present variation, the bottom wall 3D of the chamber 3 is movable in the Z-axis direction by the Z-axis drive assembly 23 as an insulation-wall mover extending in the up-and-down direction (Z-axis direction) of the apparatus. Note that the Z-axis drive assembly 23 of the present variation also has a configuration in which slide holes 3c are formed in opposed side walls 3C of the chamber 3, as illustrated in FIG. 14. However, as illustrated in FIG. 15, a configuration that does not require the slide holes 3c formed in the opposed side walls 3C of the chamber 3 may be employed.

The Z-axis drive assembly 23 of the present variation moves a support plate 23e positioned below the bottom wall 3D of the chamber 3 along the Z-axis direction, thus moving the bottom wall 3D secured to the support plate 23e along the Z-axis direction. Further, the X-axis drive assembly 21' is secured on the support plate 23e between the support plate 23e and the bottom wall 3D. The stage 4 is attached to this X-axis drive assembly 21' movably in the X-axis direction, as described above. Therefore, by moving the support plate 23e along the Z-axis direction by the drive force of the Z-axis drive assembly 23, the stage 4 attached to the X-axis drive assembly 21' can be moved in the Z-axis direction together with the bottom wall 3D of the chamber 3.

Note that, in the above description, the configuration to increase or decrease the volume of the processing space by displacing the bottom wall 3D of the chamber 3 in the Z-axis direction by the insulation-wall mover has been employed. However, the configuration is not limited thereto. For example, a configuration to increase or decrease the volume of the processing space by displacing the ceiling wall of the chamber 3 in the Z-axis direction by the insulation-wall mover may be employed. The insulation-wall mover in this case can displace the ceiling wall in the Z-axis direction with the movement of the fabrication head 10, for example. Further, for example, a configuration to increase or decrease the volume of the processing space by displacing at least one of opposed side walls of the chamber 3 in the X-axis direction may be employed. Further, for example, a configuration to increase or decrease the volume of the processing space by displacing the front wall and the rear wall of the chamber 3 in the Y-axis direction may be employed.

The above-described embodiments are limited examples, and the present disclosure includes, for example, the following aspects having advantageous effects.

### Aspect A

In a three-dimensional fabricating apparatus 1 including a chamber 3 including a processing space surrounded by insulation walls, such as the X-axis slide insulators 3A and 3B, the secure wall 3C, the bottom wall 3D, the front wall 3E, the secure wall 3F, and the insulating sheet 3G, inside the chamber 3, a processing space heater such as a chamber heater 7 that heats the processing space in the chamber 3, and a fabrication unit such as a fabrication head 10 that fabricates a three-dimensional fabrication object in the processing space heated to a target temperature by the processing space heater, an insulation-wall mover such as a Z-axis drive assembly 23 or 23' is included, which displaces at least a part (bottom wall 3D) of the insulation walls such as the bottom wall 3D to increase or decrease the volume of the processing space. In the present aspect, at least a part of the insulation walls that surround the processing space is displaced by the insulation-wall mover, whereby the volume of the processing space can be increased or decreased. If the volume of the processing space is decreased, a rising speed of the temperature in the processing space by the processing space heater can be increased. Therefore, according to the present aspect, for example, the volume of the processing space is decreased at the time of a preheating process before start of a fabrication process, whereby the time required for the preheating process can be shortened, and the first fabrication process can be started early. Further, if the volume of the processing space is increased, the temperature in the processing space can be more easily decreased. Therefore, according to the present aspect, for example, the volume of the processing space is increased at the time of cooling after termination of the fabrication process, whereby the time required for cooling can be shortened, and the three-dimensional fabrication object can be taken out early after termination of the fabrication process.

### Aspect B

In the aspect A, a fabrication-unit mover such as an X-axis drive assembly 21 or a Y-axis drive assembly 22 that moves the fabrication unit is included, and the insulation-wall mover displaces at least a part of the insulation walls with the movement of the fabrication unit. According to this aspect, the volume of the processing space can be increased by conducting the fabrication process while moving the fabrication unit by the fabrication-unit mover, and displacing at least a part of the insulation walls by the insulation-wall mover according to progress of the fabrication process. Accordingly, while the volume of the processing space is decreased at the time of the preheating process before start of the fabrication process and the time required for the preheating process can be shortened, the volume of the processing space can be increased according to the progress of the fabrication process after the start of the fabrication process. Therefore, even if the three-dimensional fabrication object to be created gradually becomes large according to the progress of the fabrication process, and a necessary processing space is increased, the necessary processing space can be secured. Note that, in the present aspect, the three-dimensional fabrication object can be fabricated without requiring a mount table mover that moves a mount table such as a stage 4 on which the three-dimensional fabrication object is placed.

### Aspect C

In the aspect A or B, a mount table such as a stage 4 disposed in the processing space and on which the three-dimensional fabrication object is placed, and a mount table mover such as the Z-axis drive assembly 23, 23', or an X-axis drive assembly 21' that moves the mount table are included, and the insulation-wall mover displaces at least a part of the insulation walls with the movement of the mount table. According to this aspect, the volume of the processing space can be increased by conducting the fabrication process while moving the mount table by the mount table mover, and displacing at least a part of the insulation walls by the insulation-wall mover according to the progress of the fabrication process. Accordingly, while the volume of the processing space is decreased at the time of the preheating process before start of the fabrication process and the time required for the preheating process can be shortened, the volume of the processing space can be increased according to the progress of the fabrication process after the start of the fabrication process. Therefore, even if the three-dimensional fabrication object to be created gradually becomes large according to the progress of the fabrication process, and a necessary processing space is increased, the necessary processing space can be secured. Note that, in the present aspect, the three-dimensional fabrication object can be fabricated without requiring the fabrication-unit mover that moves the fabrication unit.

### Aspect D

In the aspect A, a mount table such as a stage 4 disposed in the processing space, and on which the three-dimensional fabrication object is placed, and a relative mover such as the Z-axis drive assembly 23 or 23' that moves at least one of the fabrication unit and the mount table in a relative distance changing direction such as a Z-axis direction in which a relative distance between the fabrication unit and the mount table is changed are included, and the fabrication unit fabricates the three-dimensional fabrication object by supplying a fabrication material such as filaments onto the mount table, a relative distance of which from the fabrication unit is sequentially enlarged by the relative mover, to sequentially laminate a layered fabrication structure, and the insulation-wall mover displaces at least a part of the insulation walls to increase the volume of the processing space with the enlargement of the relative distance. According to this aspect, the volume of the processing space is increased by conducting the fabrication process while moving at least one of the fabrication unit and the mount table by the relative mover, and displacing at least a part of the insulation walls by the insulation-wall mover. Accordingly, while the volume of the processing space is decreased at the time of the preheating process before start of the fabrication process and the time required for the preheating process can be shortened, an increase in the necessary processing space according to the progress of the fabrication process after the start of the fabrication process can be handled.

### Aspect E

In the aspect D, a fabrication-unit mover such as a Y-axis drive assembly 22 is included, which moves the fabrication unit in a direction such as a Y-axis direction perpendicular to the relative distance changing direction, and the relative mover moves the mount table in the relative distance changing direction, and moves the mount table in a direction such as an X-axis direction perpendicular to the moving direction of the fabrication unit by the fabrication-unit mover and to the relative distance changing direction. According to this aspect, like the above-described variation, a configuration to move the fabrication unit in the one direction (Y-axis direction) by the fabrication-unit mover, and to move the mount table in the other direction (X-axis direction) by the relative mover can be employed as means to relatively move the fabrication unit and the mount table in the two directions (the X-axis direction and the Y-axis direction) perpendicular to the relative distance changing direction.

### Aspect F

In the aspect E, the relative mover has a configuration to move first moving member such as an X-axis drive assembly 21' that moves the mount table in a direction such as an X-axis direction perpendicular to the moving direction of the fabrication unit by the fabrication-unit mover and to the relative distance changing direction, by a second moving member such as the Z-axis drive assembly 23 or 23' that moves the mount table in the relative distance changing direction. According to this aspect, an advantage such as a favorable apparatus layout can be sometimes easily obtained.

### Aspect G

In the aspect D, a mount table mover that moves the mount table in a direction perpendicular to the relative distance changing direction is included, and the relative mover moves the fabrication unit in the relative distance changing direction, and moves the fabrication unit in a direction perpendicular to the moving direction of the mount table by the mount table mover and to the relative distance changing direction. According to this aspect, an advantage such as a favorable apparatus layout can be sometimes easily obtained.

### Aspect H

In any of the aspects A to G, a heating controller such as a controller 100 is included, which controls a heat supply amount per unit time to be supplied to the processing space by the processing space heater according to the increase or decrease in the volume of the processing space by the insulation-wall mover. According to this aspect, even if the volume of the processing space is increased or decreased by the insulation-wall mover, the temperature in the processing space can be appropriately controlled.

### Aspect I

In a three-dimensional fabricating chamber 3 including a processing space for fabricating a three-dimensional fabrication object therein, an insulation-wall mover such as a Z-axis drive assembly 23 or 23' is included, which displaces at least a part (bottom wall 3D) of insulation walls that surround the processing space to increase or decrease the volume of the processing space. In the present aspect, at least a part of the insulation walls that surround the processing space is displaced by the insulation-wall mover, whereby the volume of the processing space can be increased or decreased. If the volume of the processing space is decreased, a rising speed of the temperature in the processing space can be increased. Therefore, according to the present aspect, for example, the volume of the processing space is decreased at the time of a preheating process before start of a fabrication process, whereby the time required for the preheating process can be shortened, and the first fabrication process can be started early. Further, if the volume of the processing space is increased, the temperature in the processing space can be more easily decreased. Therefore, according to the present aspect, for example, the volume of the processing space is increased at the time of cooling after termination of the fabrication process, whereby the time required for cooling can be shortened, and the three-dimensional fabrication object can be taken out early after termination of the fabrication process.

### Aspect J

In a three-dimensional fabricating method of fabricating a three-dimensional fabrication object in a processing space surrounded by insulation walls after heating the processing space to a target temperature, the three-dimensional fabrication object is fabricated while increasing the volume of the processing space by displacing at least a part of the insulation walls. According to the present aspect, the volume of the processing space can be increased by displacing at least a part of the insulation walls according to progress of a fabrication process. Accordingly, while the volume of the processing space is decreased at the time of the preheating process before start of the fabrication process and the time required for the preheating process can be shortened, the volume of the processing space can be increased according to the progress of the fabrication process after the start of the fabrication process. Therefore, even if the three-dimensional fabrication object to be created gradually becomes large according to the progress of the fabrication process, and a necessary processing space is increased, the necessary processing space can be secured.

## Claims

1. A three-dimensional fabricating chamber (3) comprising:
thermal-insulation walls (3A, 3B, 3C, 3D, 3E, 3F, and 3G);
a processing space surrounded by the thermal-insulation walls (3A, 3B, 3C, 3D, 3E, 3F, and 3G), to fabricate a three-dimensional fabrication object;
a processing space heater (7) configured to heat the processing space; and
a thermal-insulation-wall mover (23, 23') configured to displace at least a part of the thermal-insulation walls (3A, 3B, 3C, 3D, 3E, 3F, and 3G) to increase or decrease a volume of the processing space,
a controller (100),
**characterised in that** the controller is configured to let the processing space heater carry out a preheating process of the processing space before start of a fabrication process, and
wherein at a time of the preheating process, the controller is configured to let the thermal-insulation-wall mover decrease the volume of the processing space

2. The three-dimensional fabricating apparatus (1) comprising:
the three-dimensional fabricating chamber (3) according to claim 1; and a fabrication unit (10) to fabricate a three-dimensional fabrication object in the processing space heated to a target temperature by the processing space heater (7).

3. The three-dimensional fabricating apparatus (1) according to claim 2, further comprising:
a fabrication-unit mover (21, 22) configured to move the fabrication unit (10),
wherein the thermal-insulation-wall mover (23, 23') is configured to displace at least a part of the thermal-insulation walls (3A, 3B, 3C, 3D, 3E, 3F, and 3G) with movement of the fabrication unit (10).

4. The three-dimensional fabricating apparatus (1) according to claim 2 or 3, further comprising:
a mount table (4) on which the three-dimensional fabrication object is to be placed, the mount table (4) disposed in the processing space; and
a mount table mover (23, 23', 21') to move the mount table (4),
wherein the thermal-insulation-wall mover (23, 23') is configured to displace at least a part of the thermal-insulation walls (3A, 3B, 3C, 3D, 3E, 3F, and 3G) with movement of the mount table (4).

5. The three-dimensional fabricating apparatus (1) according to claim 2, further comprising:
a mount table (4) on which the three-dimensional fabrication object is to be placed, the mount table (4) disposed in the processing space; and
a relative mover (23, 23') configured to move at least one of the fabrication unit (10) and the mount table (4) in a relative distance changing direction in which a relative distance between the fabrication unit (10) and the mount table (4) is changed,
wherein the fabrication unit (10) is configured to supply a fabrication material onto the mount table (4) when the relative distance of which from the fabrication unit (10) is sequentially increased by the relative mover (23, 23'), to sequentially laminate a layered fabrication structure to fabricate the three-dimensional fabrication object, and
wherein the thermal-insulation-wall mover (23, 23') is configured to displace at least a part of the thermal-insulation walls (3A, 3B, 3C, 3D, 3E, 3F, and 3G) to increase the volume of the processing space with increase of the relative distance.

6. The three-dimensional fabricating apparatus (1) according to claim 5, further comprising:
a fabrication-unit mover (21, 22) configured to move the fabrication unit (10) in a moving direction perpendicular to the relative distance changing direction,
wherein the relative mover (23, 23') is configured to move the mount table (4) in the relative distance changing direction, and moves the mount table (4) in a direction perpendicular to the moving direction of the fabrication unit (10) by the fabrication-unit mover (21, 22) and to the relative distance changing direction.

7. The three-dimensional fabricating apparatus (1) according to claim 6, wherein the relative mover (23, 23') further includes:
a first moving member (21') configured to move the mount table (4) in the direction perpendicular to the moving direction of the fabrication unit (10) by the fabrication-unit mover (21, 22) and to the relative distance changing direction; and
a second moving member (23, 23') configured to move the mount table (4) in the relative distance changing direction, and move the first moving member (21').

8. The three-dimensional fabricating apparatus (1) according to claim 5, further comprising:
a mount table mover (23, 23', 21') configured to move the mount table (4) in a direction perpendicular to the relative distance changing direction,
wherein the relative mover (23, 23') configured to move the fabrication unit (10) in the relative distance changing direction, and moves the fabrication unit (10) in a direction perpendicular to a moving direction of the mount table (4) by the mount table mover (23, 23', 21') and to the relative distance changing direction.

9. The three-dimensional fabricating apparatus (1) according to any one of claims 2 to 8, further comprising:
a heating controller (100) configured to control a heat supply amount per unit time to be supplied to the processing space by the processing space heater (7), according to an increase or decrease in the volume of the processing space by the thermal-insulation-wall mover (23, 23').

10. A three-dimensional fabricating method comprising:
heating a processing space surrounded by thermal-insulation walls (3A, 3B, 3C, 3D, 3E, 3F, and 3G) to a target temperature;
fabricating a three-dimensional fabrication object in the processing space after a temperature of the processing space reaches the target temperature; and
fabricating the three-dimensional fabrication object while displacing at least a part of the thermal-insulation walls (3A, 3B, 3C, 3D, 3E, 3F, and 3G) to increase a volume of the processing space
**characterised by** displacing at least a part of the thermal-insulation walls to decrease the volume of the processing space when the processing space is being heated to a target temperature.

## Patentansprüche

1. Dreidimensionale Herstellungskammer (3), umfassend:
Wärmedämmwände (3A, 3B, 3C, 3D, 3E, 3F und 3G);
einen von den Wärmedämmwänden (3A, 3B, 3C, 3D, 3E, 3F und 3G) umgebenen Verarbeitungsraum zum Herstellen eines dreidimensionalen Herstellungsobjekts;
ein Verarbeitungsraum-Heizgerät (7), das konfiguriert ist, den Verarbeitungsraum zu heizen; und
eine Wärmedämmwand-Bewegungsvorrichtung (23, 23'), die konfiguriert ist, mindestens einen Teil der Wärmedämmwände (3A, 3B, 3C, 3D, 3E, 3F und 3G) zu verschieben, um ein Volumen des Verarbeitungsraums zu vergrößern oder zu verringern,
eine Steuerung (100),
**dadurch gekennzeichnet, dass** die Steuerung konfiguriert ist, das Verarbeitungsraum-Heizgerät einen Vorheizprozess des Verarbeitungsraums vor dem Beginn eines Herstellungsprozesses ausführen zu lassen, und
wobei die Steuerung zu einer Zeit des Vorheizprozesses konfiguriert ist, die Wärmedämmwand-Bewegungsvorrichtung das Volumen des Verarbeitungsraums verringern zu lassen.

2. Dreidimensionale Herstellungsvorrichtung (1), umfassend:
die dreidimensionale Herstellungskammer (3) nach Anspruch 1; und eine Herstellungseinheit (10) zum Herstellen eines dreidimensionalen Herstellungsobjekts in dem Verarbeitungsraum, der von dem Verarbeitungsraum-Heizgerät (7) auf eine Zieltemperatur erhitzt wird.

3. Dreidimensionale Herstellungsvorrichtung (1) nach Anspruch 2, ferner umfassend:
eine Herstellungseinheit-Bewegungsvorrichtung (21, 22), die konfiguriert ist, die Herstellungseinheit (10) zu bewegen,
wobei die Wärmedämmwand-Bewegungsvorrichtung (23, 23') konfiguriert ist, mindestens einen Teil der Wärmedämmwände (3A, 3B, 3C, 3D, 3E, 3F und 3G) bei Bewegung der Herstellungseinheit (10) zu verschieben.

4. Dreidimensionale Herstellungsvorrichtung (1) nach Anspruch 2 oder 3, ferner umfassend:
einen Montagetisch (4), auf dem das dreidimensionale Herstellungsobjekt platziert werden soll, wobei der Montagetisch (4) in dem Verarbeitungsraum angeordnet ist; und
eine Montagetisch-Bewegungsvorrichtung (23, 23', 21') zum Bewegen des Montagetisches (4),
wobei die Wärmedämmwand-Bewegungsvorrichtung (23, 23') konfiguriert ist, mindestens einen Teil der Wärmedämmwände (3A, 3B, 3C, 3D, 3E, 3F und 3G) bei Bewegung des Montagetischs (4) zu verschieben.

5. Dreidimensionale Herstellungsvorrichtung (1) nach Anspruch 2, ferner umfassend:
einen Montagetisch (4), auf dem das dreidimensionale Herstellungsobjekt platziert werden soll, wobei der Montagetisch (4) in dem Verarbeitungsraum angeordnet ist; und
eine relative Bewegungsvorrichtung (23, 23'), die konfiguriert ist, mindestens eines von der Herstellungseinheit (10) und dem Montagetisch (4) in einer relativen Abstandänderungsrichtung zu bewegen, in der ein relativer Abstand zwischen der Herstellungseinheit (10) und dem Montagetisch (4) geändert wird,
wobei die Herstellungseinheit (10) konfiguriert ist, ein Herstellungsmaterial auf den Montagetisch (4) zuzuführen, wenn der relative Abstand dessen von der Herstellungseinheit (10) sequenziell durch die relative Bewegungsvorrichtung (23, 23') vergrößert wird, um eine geschichtete Herstellungsstruktur sequenziell zu laminieren, um das dreidimensionale Herstellungsobjekt herzustellen, und
wobei die Wärmedämmwand-Bewegungsvorrichtung (23, 23') konfiguriert ist, mindestens einen Teil der Wärmedämmwände (3A, 3B, 3C, 3D, 3E, 3F und 3G) zu verschieben, um das Volumen des Verarbeitungsraums bei Vergrößerung des relativen Abstands zu vergrößern.

6. Dreidimensionale Herstellungsvorrichtung (1) nach Anspruch 5, ferner umfassend:
eine Herstellungseinheit-Bewegungsvorrichtung (21, 22), die konfiguriert ist, die Herstellungseinheit (10) in einer Bewegungsrichtung senkrecht zur relativen Abstandänderungsrichtung zu bewegen,
wobei die relative Bewegungsvorrichtung (23, 23') konfiguriert ist, den Montagetisch (4) in der relativen Abstandänderungsrichtung zu bewegen, und den Montagetisch (4) in einer Richtung senkrecht zur Bewegungsrichtung der Herstellungseinheit (10) durch die Herstellungseinheit-Bewegungsvorrichtung (21, 22) und zur relativen Abstandänderungsrichtung bewegt.

7. Dreidimensionale Herstellungsvorrichtung (1) nach Anspruch 6, wobei die relative Bewegungsvorrichtung (23, 23') ferner Folgendes beinhaltet:
ein erstes Bewegungselement (21'), das konfiguriert ist, den Montagetisch (4) in der Richtung senkrecht zur Bewegungsrichtung der Herstellungseinheit (10) durch die Herstellungseinheit-Bewegungsvorrichtung (21, 22) und zur relativen Abstandänderungsrichtung zu bewegen; und
ein zweites Bewegungselement (23, 23'), das konfiguriert ist, den Montagetisch (4) in der relativen Abstandänderungsrichtung zu bewegen und das erste Bewegungselement (21') zu bewegen.

8. Dreidimensionale Herstellungsvorrichtung (1) nach Anspruch 5, ferner umfassend:
eine Montagetisch-Bewegungsvorrichtung (23, 23', 21'), die konfiguriert ist, den Montagetisch (4) in einer Richtung senkrecht zur relativen Abstandänderungsrichtung zu bewegen,
wobei die relative Bewegungsvorrichtung (23, 23'), die konfiguriert ist, die Herstellungseinheit (10) in der relativen Abstandänderungsrichtung zu bewegen, und die Herstellungseinheit (10) in einer Richtung senkrecht zu einer Bewegungsrichtung des Montagetischs (4) durch die Montagetisch-Bewegungsvorrichtung (23, 23', 21') und zur relativen Abstandänderungsrichtung bewegt.

9. Dreidimensionale Herstellungsvorrichtung (1) nach einem der Ansprüche 2 bis 8, ferner umfassend:
eine Heizsteuerung (100), die konfiguriert ist, eine Wärmezufuhrmenge pro Zeiteinheit, die dem Verarbeitungsraum durch das Verarbeitungsraum-Heizgerät (7) zugeführt werden soll, gemäß einer Vergrößerung oder Verringerung des Volumens des Verarbeitungsraums durch die Wärmedämmwand-Bewegungsvorrichtung (23, 23') zu steuern.

10. Dreidimensionales Herstellungsverfahren, umfassend:
Heizen eines von Wärmedämmwänden (3A, 3B, 3C, 3D, 3E, 3F und 3G) umgebenen Verarbeitungsraums auf eine Zieltemperatur;
Herstellen eines dreidimensionalen Herstellungsobjekts in dem Verarbeitungsraum, nachdem eine Temperatur des Verarbeitungsraums die Zieltemperatur erreicht; und
Herstellen des dreidimensionalen Herstellungsobjekts, während mindestens ein Teil der Wärmedämmwände (3A, 3B, 3C, 3D, 3E, 3F und 3G) verschoben wird, um ein Volumen des Verarbeitungsraums zu vergrößern,
**gekennzeichnet durch** Verschieben mindestens eines Teils der Wärmedämmwände, um das Volumen des Verarbeitungsraums zu verringern, wenn der Verarbeitungsraum auf eine Zieltemperatur erhitzt wird.

## Revendications

1. Chambre de fabrication tridimensionnelle (3) comprenant :
des parois d'isolation thermique (3A, 3B, 3C, 3D, 3E, 3F et 3G) ;
un espace de traitement entouré par les parois d'isolation thermique (3A, 3B, 3C, 3D, 3E, 3F et 3G), pour fabriquer un objet de fabrication tridimensionnel ;
un chauffage d'espace de traitement (7) conçu pour chauffer l'espace de traitement ; et
un dispositif de déplacement de paroi d'isolation thermique (23, 23') conçu pour déplacer au moins une partie des parois d'isolation thermique (3A, 3B, 3C, 3D, 3E, 3F et 3G) pour augmenter ou diminuer un volume de l'espace de traitement,
un dispositif de traitement (100),
**caractérisé en ce que** le dispositif de commande est conçu pour amener le chauffage d'espace de traitement à effectuer un processus de préchauffage de l'espace de traitement avant le début d'un processus de fabrication, et
à un moment du processus de préchauffage, le dispositif de commande étant conçu pour amener le dispositif de déplacement de paroi d'isolation thermique à diminuer le volume de l'espace de traitement.

2. Appareil de fabrication tridimensionnel (1) comprenant :
la chambre de fabrication tridimensionnelle (3) selon la revendication 1 ; et
une unité de fabrication (10) pour fabriquer un objet de fabrication tridimensionnel dans l'espace de traitement chauffé jusqu'à une température par le chauffage de l'espace de traitement (7).

3. Appareil de fabrication tridimensionnel (1) selon la revendication 2, comprenant en outre :
un dispositif de déplacement d'unité de fabrication (21, 22) conçu pour déplacer l'unité de fabrication (10),
le dispositif de déplacement de paroi d'isolation thermique (23, 23') étant conçu pour déplacer au moins une partie des parois d'isolation thermique (3A, 3B, 3C, 3D, 3E, 3F et 3G) avec un déplacement de l'unité de fabrication (10).

4. Appareil de fabrication tridimensionnel (1) selon la revendication 2 ou 3, comprenant en outre :
une table de support (4) sur laquelle l'objet de fabrication tridimensionnel doit être placé, la table de support (4) disposée dans l'espace de traitement ; et
un dispositif de déplacement de table de support (23, 23', 21') pour déplacer la table de support (4),
le dispositif de déplacement de paroi d'isolation thermique (23, 23') étant conçu pour déplacer au moins une partie des parois d'isolation thermique (3A, 3B, 3C, 3D, 3E, 3F et 3G) avec un déplacement de la table de support (4).

5. Appareil de fabrication tridimensionnel (1) selon la revendication 2, comprenant en outre :
une table de support (4) sur laquelle l'objet de fabrication tridimensionnel doit être placé, la table de support (4) disposée dans l'espace de traitement ; et
un dispositif de déplacement relatif (23, 23') conçu pour déplacer l'unité de fabrication (10) et/ou la table de support (4) dans une direction de changement de distance relative dans laquelle une distance relative entre l'unité de fabrication (10) et la table de support (4) est changée,
l'unité de fabrication (10) étant conçue pour fournir un matériau de fabrication sur la table de support (4) lorsque la distance relative de celle-ci depuis l'unité de fabrication (10) est augmentée séquentiellement par le dispositif de déplacement relatif (23, 23'), pour stratifier séquentiellement une structure de fabrication en couches pour fabriquer l'objet tridimensionnel, et
le dispositif de déplacement de paroi d'isolation thermique (23, 23') étant conçu pour déplacer au moins une partie des parois d'isolation thermique (3A, 3B, 3C, 3D, 3E, 3F et 3G) pour augmenter le volume de l'espace de traitement avec l'augmentation de la distance relative.

6. Appareil de fabrication tridimensionnel (1) selon la revendication 5, comprenant en outre :
un dispositif de déplacement d'unité de fabrication (21, 22) conçu pour déplacer l'unité de fabrication (10) dans une direction de déplacement perpendiculaire à la direction de changement de distance relative,
le dispositif de déplacement relatif (23, 23') étant conçu pour déplacer la table de support (4) dans la direction de changement de distance relative, et déplaçant la table de support (4) dans une direction perpendiculaire à la direction de déplacement de l'unité de fabrication (10) par le dispositif de déplacement d'unité de fabrication (21, 22) et vers la direction de changement de distance relative.

7. Appareil de fabrication tridimensionnel (1) selon la revendication 6, dans lequel le dispositif de déplacement relatif (23, 23') comprend en outre :
un premier élément de déplacement (21') conçu pour déplacer la table de support (4) dans la direction perpendiculaire à la direction de déplacement de l'unité de fabrication (10) par le dispositif de déplacement d'unité de fabrication (21, 22) et vers la direction de changement de distance relative ; et
un deuxième élément de déplacement (23, 23') conçu pour déplacer la table de support (4) dans la direction de changement de distance relative, et déplacer le premier élément de déplacement (21').

8. Appareil de fabrication tridimensionnel (1) selon la revendication 5, comprenant en outre :
un dispositif de déplacement de table de support (23, 23', 21') conçu pour déplacer la table de support (4) dans une direction perpendiculaire à la direction de changement de distance relative,
le dispositif de déplacement relatif (23, 23') conçu pour déplacer l'unité de fabrication (10) dans la direction de changement de distance relative, et déplaçant l'unité de fabrication (10) dans une direction perpendiculaire à la direction de déplacement de la table de support (4) par le dispositif de déplacement de table de support (23, 23', 21') et vers la direction de changement de distance relative.

9. Appareil de fabrication tridimensionnel (1) selon l'une quelconque des revendications 2 à 8, comprenant en outre :
un dispositif de commande de chauffage (100) conçu pour commander une quantité d'apport de chaleur par unité de temps à fournir à l'espace de traitement par le chauffage d'espace de traitement (7), en fonction d'une augmentation ou diminution du volume de l'espace de traitement par le dispositif de déplacement de paroi d'isolation thermique (23, 23').

10. Procédé de fabrication tridimensionnel comprenant :
le chauffage d'un espace de traitement entouré par les parois d'isolation thermique (3A, 3B, 3C, 3D, 3E, 3F et 3G) jusqu'à une température cible ;
la fabrication d'un objet de fabrication tridimensionnel dans l'espace de traitement après qu'une température de l'espace de traitement a atteint la température cible ; et
la fabrication de l'objet de fabrication tridimensionnel tout en déplaçant au moins une partie des parois d'isolation thermique (3A, 3B, 3C, 3D, 3E, 3F et 3G) pour augmenter un volume de l'espace de traitement
**caractérisé par** le déplacement d'au moins une partie des parois d'isolation thermique pour diminuer le volume de l'espace de traitement lorsque l'espace de traitement est chauffé jusqu'à une température cible.
